Europäisches Patentamt

European Patent Office

Office européen des brevets

(19)

(11) Publication number: **0 100 961**
**A1**

## EUROPEAN PATENT APPLICATION

(12)

(21) Application number: **83107384.6**

(22) Date of filing: **27.07.83**

(51) Int. Cl.³: **G 11 B 5/04**

(30) Priority: **06.08.82 JP 136400/82**

(43) Date of publication of application:
**22.02.84 Bulletin 84/8**

(84) Designated Contracting States:
**DE FR GB IT**

(71) Applicant: **International Business Machines
Corporation
Old Orchard Road
Armonk, N.Y. 10504(US)**

(72) Inventor: **Matsumoto, Takeshi
7-3 Misono 1-chome
Sagamihara-shi Kanagawa-ken(JP)**

(74) Representative: **Barth, Carl Otto
IBM Europäische Patentdienste Rablstrasse 24
D-8000 München 80(DE)**

(54) Demodulation with error detecting capability.

㉗ In a demodulator for recovering data from a frequency modulated data signal having clock peaks and data peaks read from a record medium, error detection is accomplished by checking the occurrence of the peaks of the signal relative to three windows. The time lengths of the windows are varied after each clock peak so that they are proportionally related to a length of interval between a clock peak and the preceding one.

FIG. 1

EP 0 100 961 A1

## DEMODULATION WITH ERROR DETECTING CAPABILITY

This invention relates to a demodulator or a decoder for data signals that are read from a recording medium, more particularly, to detect errors in a demodulator for data signals that are obtained by reading a record according to a frequency modulation (F/2F coding) system.

United States Patent No. 3 534 164 issued on 11 August 1970 discloses a typical example of prior art that detects errors in signals read from a recording medium. It detects errors by reviewing relations between a plurality of time frames that are determined by a series of single shot output, and transition of input signals. However, because it is intended to detect errors along with demodulation of phase modulated signals, and requires to check the direction of the transition, it is not suitable to detect errors in demodulating signals of a frequency modulation system. Further, because the length of the time frames are always fixed, satisfactory results cannot be obtained when handling reading signals in which the length of signal parts representing each bit is somewhat varied.

A device itself is known that demodulates reading signals in which the length of signal parts representing each bit is somewhat varied. For example, a device disclosed in Published Unexamined Japanese Patent Application No. 7037/71 issued on 17 December 1971 is designed so that it receives signals according to a frequency modulation system, generates a signal to determine a time frame of a length equal to two thirds of the time interval between one clock peak and the preceding clock peak whenever a clock peak is generated, and determines whether the data is "1" or "0" in response whether a peak is generated or not within the time frame. However, this is never intended to detect errors, and therefore has a disadvantage that it detects an abnormal peak as one representing correct data.

This invention intends to overcome this disadvantage. The main object of this invention is to provide a demodulator that has a capability to accurately detect an abnormal condition in a reading signal even in a situation where parts corresponding to successive bits of input signals in a frequency modulation system, vary and to indicate this as an error.

The demodulator according to this invention comprises first means that receives frequency modulated signals having successive clock peaks and a plurality of peaks that contain data peaks lying between these clock peaks in response to data, and that generates peak detecting pulses according to these successive peaks; second means that generates output pulses according to the peak detecting pulses that would correspond to the clock peaks; third means that, whenever the said second means generates an output pulse, generates output representing the time interval D between the output pulse and another output pulse one before it; fourth means that receives the output of said third means, and that generates three outputs representing $\alpha D$, $\beta D$ and $\gamma D$ respectively by making $\alpha$, $\beta$ and $\gamma$ constants that have a relation of $0 < \alpha < \beta < 1 < \gamma$; fifth means that, based on three outputs of said fourth means, generates a signal to determine a first time frame that begins with a reference point, which is the time when each output pulse of said second means is generated, and has a

JA 982 010

duration corresponding to $\alpha D$, a signal to determine, succeeding said first time frame, a second time frame having a duration corresponding to $(\beta - \alpha)D$, and a signal to determine a third time frame starting after a time corresponding to $\gamma D$ from said reference point; and sixth means that is connected to said fifth means and said first means, and has a capability to generate an error signal according to generation of the peak detecting pulse in either the first time frame or the third time frame, and a capability to generate an error detecting signal according to generation of two peak detecting pulses in the second time frame.

In a preferred embodiment described later the following values were selected: $\alpha = 0.25$, $\beta = 0.75$ and $\gamma = 1.25$. The third means is embodied by a counter and an oscillator. The fourth means is embodied by a register and multipliers, the fifth means by comparators and a decoder.

The demodulator according to this invention is particularly suitable to demodulate signals read from a passbook with a magnetic stripe or a card with a magnetic stripe. This is, when reading such recording media, it is very important to detect an abnormal reading signal as an error. On one hand, erroneous reading signals are easily generated resulting from variations of the relative speed between a head and the recording medium, on the other hand the recorded data is often related to the handling of money.

Now a preferred embodiment of the invention is described by referring to the drawings in which:

JA 982 010

Figure 1    is a block diagram of a demodulator with
            error detecting capability according to
            this invention;

Figure 2    is a timing diagram that illustrates relations of various signals in the demodulator

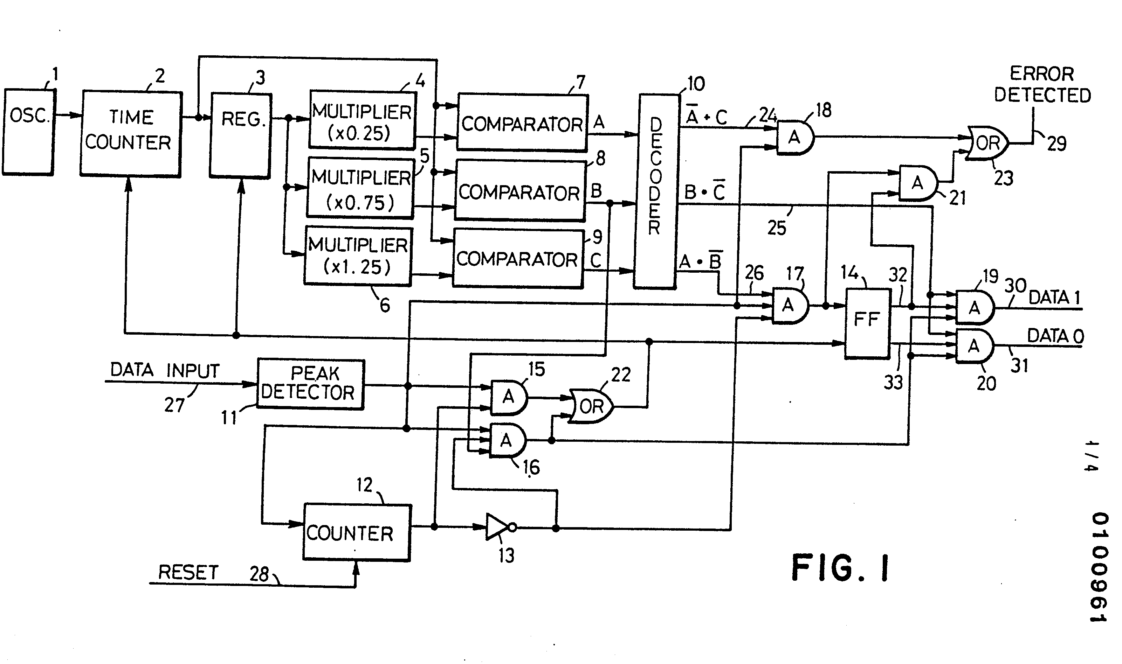

            in Figure 1 when processing a normal input
            data signal; and

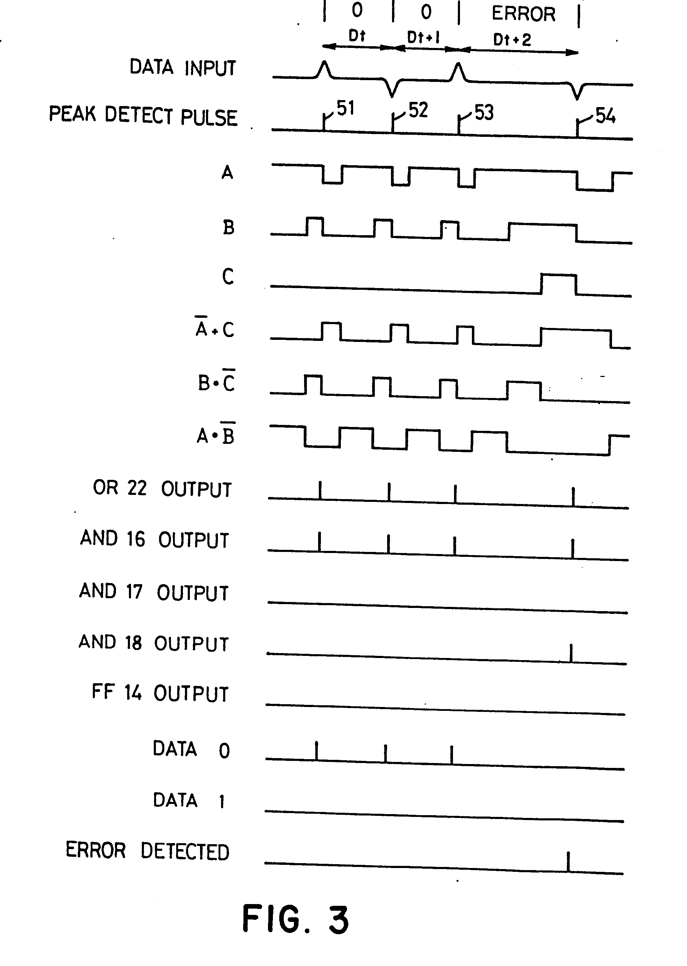

Figures 3   are timing diagrams that illustrate rela-
and       4 tions of various signals in the demodulator
            in Figure 1 when processing abnormal input
            data signals.

Figure 1 shows a construction of a demodulator incorporating an arrangement for detecting errors according
to the invention. The oscillator 1 generates a pulse
train in a sufficiently short period compared with bit
intervals of data input signals that appear on the line
27. The time counter 2 has a function to count these
pulses. The count of the time counter 2 is transferred
to and held at the register 3 whenever an output is
generated from the OR circuit 22 as explained later.
The time counter 2 is reset at the same time of this
transfer of the count, and restarts counting from an
initial value.

The output side of the register 3 connects to the multipliers 4, 5 and 6. They generate outputs representing
0.25 P, 0.75 P and 1.25 P, obtained by multiplying the
count P held in register 3 by 0.25, 0.75 and 1.25 respectively. These outputs become inputs for the corresponding comparators 7, 8, and 9. They also receive the
increasing count of counter 2 as their input, compare
it with the outputs from the multipliers 4, 5, and 6,

JA 982 010

generate the outputs A, B, and C that are at low level if the count is 0.25 P, 0.75 P and 1.25 P or less, and at high level if the count is larger than these values, and send them to the decoder 10.

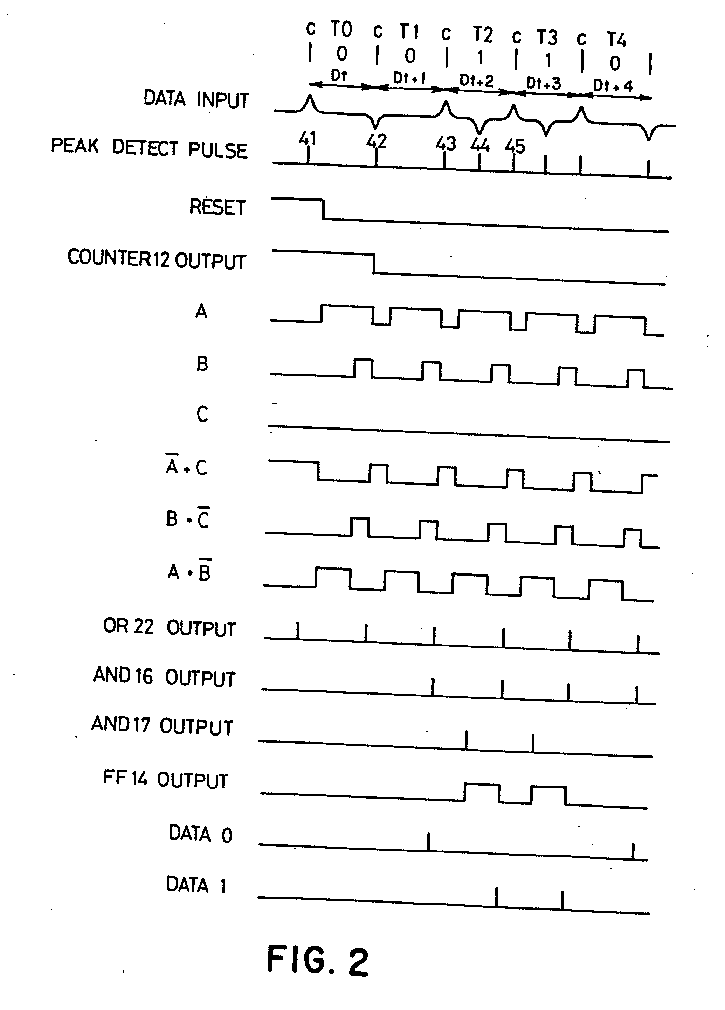

The decoder 10 generates three signals on the lines 24, 25, and 26 by logically combining the outputs A, B, and C from the comparators 7, 8, and 9. The signal on line 24 is $\overline{A} + C$, namely at high level when the output A is at low level, or when the output C is at high level. The signal on the line 25 is $B \times \overline{C}$, namely at high level when the output B is at high level and when the output C is at low level. The signal on the line 26 is $A \times \overline{B}$, namely at high level when the output A is at high level and when the output B is at low level. The relation between these signals is clearly shown in Figure 2 that is discussed later. The signal on line 24 is the input for the AND circuit 18, the signal on line 25 the input for the AND circuits 19 and 20, the signal on line 26 the input for the AND circuit 17.

The input data signals provided on line 27 are obtained by reading a recording media such as a magnetic stripe with the frequency modulation system, and have successive positive and negative peaks as shown at the top of Figure 2. In the figure, the peaks below the indication c are clock peaks, by which the bit intervals T0, T1, T2 and the like are separated. It is arranged that a data peak appears at the center during a bit interval representing bit "1", and that no data peak appears during a bit interval representing bit "0".

The peak detector 11, which receives the input data signals, detects all peaks, and generates corresponding peak detecting pulses that are supplied to the AND

JA 982 010

circuits 15, 16, 17 and 18, as well as the counter 12. The counter 12 is designed that it maintains high level output after being provided with a reset signal through the line 28, and that it turns the output to low level when receiving N number of the peak detecting pulses generated by the peak detector 11, and that it then remains at that state. Such counter 12 is used to properly measure the duration of the bit interval that becomes a reference when starting the demodulation, while ignoring any noise that may be generated at the time to start the reading. Therefore, N is a value that can be set to any magnitude. For the embodiment shown in Figure 2, N = 2. I.e., after a second peak detecting pulse 42 is generated, the demodulation of the data is performed.

The output of the counter 12 is supplied to the AND circuit 15, and, after being inverted by the inverter 13, to the AND circuits 16 and 17. The AND circuit 16 also receives the output of the comparator 8. The OR circuit 22 gates the pulses generated by the AND circuits 15 and 16 as the outputs. These outputs are used for controlling the time counter 2 and the register 3, as described above, and to reset the flip-flop 14.

The flip-flop 14 is set when pulses are generated from the AND circuit 17. The flip-flop 14 produces a high level output on line 32 in its set state, and a high level output on line 33 in its reset state. The AND circuits 19 and 20 generate signals that indicate demodulated data. The AND circuit 19 delivers a data 1 signal that becomes high level only when all of the signals on the lines 25 and 32, and the output of the AND circuit 16 are at high level, which indicates a bit "1". On the other hand, the AND circuit 20 delivers a data 0 signal that becomes high level only when all of the signals on the lines 25 and 33, and the output of the AND circuit 16 are at high level, which indicates bit "0".

The AND circuits 18 and 21, and the OR circuit 23 are provided to generate an error detecting signal if the input signals are in any abnormal condition. The AND circuit 18 gates the peak detecting pulses to the OR circuit 23 when the signals on the line 24 are at high level. In response to this, the OR circuit 23 generates an error detecting signal on line 29. Since the AND circuit 18 utilizes the signal $\overline{A} + C$ as its input, it detects an abnormal condition if the peak detecting pulse is generated either in a time frame where the output A of the comparator 7 is at low level, or in a time frame while the output C of the comparator 9 is at high level.

On the other hand, the AND circuit 21 acts to generate an error detecting signal by gating to the OR circuit 23 the pulse caused from the AND circuit 17 when the flip-flop 14 is set. Consequently, this arrangement allows to detect an abnormal condition when two peak detecting pulses are generated in a time frame determined by the signal $A \cdot \overline{B}$.

Now, the operation of the demodulator in Figure 1 is described in more detail referring to Figures 2 through 4. First, a brief description is given concerning the judging criteria when this demodulator detects data. A peak detecting pulse is recognized as representing bit "1" if the pulse is generated during a time frame that begins when a time period corresponding to 0.25 times of the duration D of the preceding bit time expires

JA 982 010

(after a reference point at which a pead detecting pulse indicated beginning of a bit time) or an output pulse of the OR circuit 22 appears which has a duration corresponding to $(0.75 - 0.25)D$. A peak pulse is recognized as representing bit "0" if the pulse is not generated during the above time frame, but is generated during the succeeding time frame that has a duration corresponding to $(1.25 - 0.75)D$.

Figure 2 shows a manner wherein normal input signals are processed. First, the time counter 2 counts from the instant at which the output pulse of the OR circuit 22 corresponding to the peak detecting pulse 41 is generated to the instant at which the output pulse of the OR circuit 22 corresponding to the next peak detecting pulse 42 is generated, so as to measure the duration of the bit time T0. In response to the generation of this second output pulse, the count of the time counter 2 is transferred to the register 3. At the same time, the counter 2 is reset, and restarts the counting. The count received by the register 3 represents the duration $D_t$ of the bit time T0, and is utilized in the next bit time T1. The signal part in the bit time T0 corresponds to a preamble preceding actual data, and is not detected as data. However, because it is required to indicate the duration of the bit time to be a reference, this preamble is recorded as to indicate bit "0".

When the peak detecting pulse 42 is generated, the counter 2 makes the output low level to allow detection of the succeeding data.

As described, the multipliers 4, 5 and 6 multiply the count stored in the register 3 by 0.25, 0.75 and 1.25

JA 982 010

times, respectively, and supplies the results to the comparators 7, 8 and 9. These comparators generate high level output A, B and C when the count of the time counter 2 becomes larger than the output of the multipliers 4, 5 and 6.

Because, in the example of Figure 2, the signal in the bit time T1 represents bit "0", the next peak detecting pulse, 43, is generated when the signal B x $\overline{C}$ of the decoder 10 is at high level. At this time, because a pulse is also generated from the AND circuit 16, and the flip-flop 14 is in a reset state, the AND circuit 20 generates the data 0 signal on line 31. The pulse generated from the AND circuit 16 activates the time counter 2 and the register 3 to transfer the count to the register 3 and resets the time counter 2. The succeeding operational manner of the multipliers 4 through 6 and the comparators 7 through 9 is the same as that in the preceding bit time T1. However, the timing when the levels of the output A, B and C vary depends on the counts representing the duration $D_{t+1}$ of the bit time T1.

Because, in this example, the signal in the bit time T2 represents bit "1", the next peak detecting pulse, 44, is generated when the signal A $\cdot$ $\overline{B}$ is at high level. Therefore, the AND circuit 17 generates a pulse to set the flip-flop 14. At this stage, however, the data 1 signal is not yet generated on line 30. Then, when the peak detecting pulse 45, which indicates the end of the bit time T2, or the beginning of the next bit time T3, is generated while the signal B $\cdot$ $\overline{C}$ is at high level, the input requirement for the AND circuit 19 is fulfilled, and a data signal appears on line 30. At the same time, the flip-flop 14 is reset by an output pulse of the OR circuit 22. In response to this output pulse, the count in the time counter 2 is transferred to the register 3. In succeeding time frames T3 and T4, similar operations take place. Since Figure 2 shows the example wherein normal input data signals are processed, no error detecting signal is generated.

Figure 3 shows the operation of the demodulator when a peak interval is abnormally long in a part of the signal. A possible cause of such an abnormal signal is failed reading of a record because of a bouncing head or dirt on the recording medium. The operation of the demodulator in Figure 1 in response to the generation of the peak detecting pulses 51, 52, and 53 is same as that described for Figure 2. The count stored in the register 3 when the peak detecting pulse 53 is generated, represents the duration of time $D_{t+1}$ between the peak detecting pulses 52 and 53, based on which the timing for varying the levels of the output A, B and C from the comparators 7 through 9 is determined. In this example, the duration of time $D_{t+2}$ until generation of the next peak detecting pulse 54 is longer than 1.25 $D_{t+1}$. The peak detecting pulse 54 is generated while the output C of the comparator 9 or the signal $\overline{A} + C$ is at high level. Therefore, the AND circuit 18 gates the peak detecting pulse 54 to cause generation of an error detecting signal by the OR circuit 23.

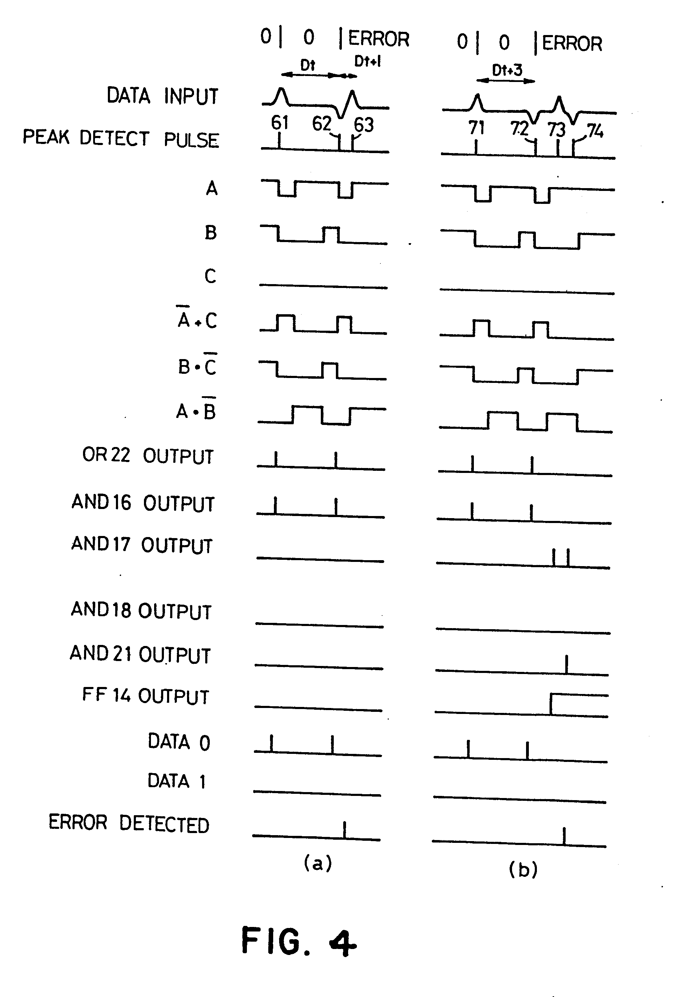

Both Figure 4(a) and 4(b) show the operation of the demodulator when the peak interval is abnormally short. A possible cause of such an abnormal signal is noise interference during reading because of mechanical vibrations, or sudden variation of the relative speed between the head and the recording media. Preferring to Fig. 4(a), at the generation of the peak detecting pulse 62, the count representing the duration of time $D_t$ between this pulse and the preceding peak detecting pulse 61 is stored in the register 3. Then, the next peak detecting pulse 63 appears before 0.25 $D_t$ expires, i.e., while the output A is at low level, or while the signal $\overline{A} + C$ is at high level. Therefore an error detecting signal is generated by the action of the AND circuit 18 and the OR circuit 23.

Figure 4(b) shows a state where two peak detecting pulses, 73 and 74, successively appear during the time that begins after 0.25 $D_{t+3}$ expired. Peak detecting pulse 72 is a reference point since the peak detecting pulses 71 and 72 were generated at the proper time interval $D_{t+3}$. In other words, the two pulses occur in the time interval $(0.75 - 0.25)D_{t+3}$, i.e. while the signal $A \cdot \overline{B}$ is at high level. First, the AND circuit 17 generates a pulse in response to the peak detecting pulse 73 to set the flip-flop 14. When the next peak detecting pulse 74 is generated, the AND circuit 17 also generates a pulse. Therefore, the input requirement is fulfilled for the AND circuit 21, from which an output pulse appears as an error detecting signal on line 29 through the OR circuit 23.

The demodulator according to this invention can accurately perform demodulation of data and detection of errors even in such situation that peak intervals are somewhat modulated. This invention is not restricted to the above-mentioned embodiment, but can be embodied in various forms. For example, the magnification of the multipliers may be selected at values other than 0.25, 0.75 and 1.25. In addition, the comparators may be arranged so that they generate high level output when the counts of the time counter are smaller than the output of the multipliers. This can be attained
by suitably changing the logic combination function of
the decoder 10.

CLAIMS

1. A demodulator for frequency modulated signals having successive clock peaks and a plurality of data peaks between said clock peaks, characterized by

first means (11) generating peak detecting pulses according to successive peaks of said input signals;

second means (15, 16, 22) generating output pulses according to those of said peak detecting pulses that correspond to the clock peaks;

third means (1, 2) generating output signals representing the time interval D between an output pulse and the preceding output pulse whenever said second means generates an output pulse;

fourth means (3, 4, 5, 6) receiving the output signals of said third means and generating three output values representing $\alpha D$, $\beta D$, and $\gamma D$, respectively, wherein $\alpha$, $\beta$ and $\gamma$ are constants that have a relation of $0 < \alpha < \beta < 1 < \gamma$,

fifth means (7, 8, 9, 10) connected to said fourth means, generating a first signal to determine a first time frame of a duration $\alpha D$ beginning with a reference point, which is the time when each output pulse of said second means is generated, a second signal to determine, succeeding said first time frame, a second time frame having a duration corresponding to $(\beta - \alpha)D$, and a third signal to determine a third time frame starting when a time corresponding to γD lapses from said reference point, and

sixth means (14, 17, 18, 21, 23) connected to said fifth and said first means, generating an error detecting signal if a peak detecting pulse occurs in either the first time frame or the third time frame, or if at least two peak detecting pulses occur in the second time frame.

2. The demodulator of claim 1, wherein the third means, which generates output signals representing the time interval D between two successive output pulses, comprises an oscillator (1) and a counter (2) connected to said oscillator (1).

3. The demodulator of claim 1 or 2, wherein the fourth means, which generates the three output values αD, βD, and γD, include. a register (3) and three multipliers (4, 5, 6) whose input terminals are connected in parallel to said register (3) and whose output terminals are connected to the fifth means (7, 8, 9, 10).

4. The demodulator of any of the preceding claims, wherein the fifth means, which generates the signals determining the three time frames, include three comparators (7, 8, 9) and a decoder (10) connected to said comparators (7, 8, 9).

5. A method for demodulating a frequency modulated signal having clock peaks and data peaks, characterized by checking the occurrence of the peaks relative to three windows of different time lengths which time lengths are varied after each detected clock peak to be proportionally related to the time interval D between the two previous clock peaks.

6.  The method of claim 5, wherein the following values are selected:  $\alpha = 0.25$;  $\beta = 0.75$; and  $\gamma = 1.25$.

7.  The method of any of the preceding method claims, wherein a first signal determines a first time window $\alpha D$ beginning with a reference point, wherein a second signal determines a second time window $(\beta - \alpha)D$ following said first time window, and wherein a third signal determines a third time window starting after a time $\gamma D$ from said reference point.

FIG. 1

FIG. 2

FIG. 3

FIG. 4

## European Patent Office

## EUROPEAN SEARCH REPORT

| | DOCUMENTS CONSIDERED TO BE RELEVANT | | EP 83107384.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US - A - 3 590 381 (RAGSDALE)<br>* Fig. 1; column 2, lines 54-75 * | 1-3 | G 11 B  5/04 |
| A | US - A - 3 656 064 (GILES)<br>* Fig. 1; column 4, lines 15-20, lines 55-59 * | 1,2 | |
| A | US - A - 3 760 412 (BARNES)<br>* Fig. 1; column 3, lines 25-65; abstract * | 1,2 | |
| A | US - A - 3 631 422 (KRAJEWSKI)<br>* Fig. 8; column 9, lines 28-34 * | 1,4 | |
| | ---- | | |

| TECHNICAL FIELDS SEARCHED (Int. Cl. ³) |
|---|
| G 11 B  5/00 |
| G 06 F  5/00 |
| G 06 F 11/00 |
| G 06 K  7/00 |
| H 04 L 27/00 |
| H 03 K  9/00 |

The present search report has been drawn up for all claims

| Place of search | Date of completion of the search | Examiner |
|---|---|---|
| VIENNA | 27-10-1983 | BERGER |